# EUROPÄISCHE PATENTSCHRIFT

(11) **EP 0 614 775 B1**
(45) Veröffentlichungstag und Bekanntmachung des Hinweises auf die Patenterteilung: **13.08.1997**
(21) Anmeldenummer: 94100692.6
(22) Anmeldetag: 19.01.1994
(51) Int. Cl.: B60J 1/02, B60J 10/12, B60J 1/10

(54) **Karosseriefenster**
Vehicle window
Fenêtre pour véhicule

(30) Priorität: 11.03.1993 DE 4307634
(43) Veröffentlichungstag der Anmeldung: 14.09.1994
(73) Patentinhaber: HENNIGES ELASTOMER- UND KUNSTSTOFFTECHNIK GMBH & CO KG, D-31547 Rehburg-Loccum (DE)
(72) Erfinder: Kreye, Bernhard, D-31515 Wunstorf (DE)
(74) Vertreter: Wehser, Wulf, Dipl.-Ing.

(56) Entgegenhaltungen:
- EP-A- 0 494 824
- DE-A- 3 447 271
- DE-A- 3 742 719
- FR-A- 2 340 217
- PATENT ABSTRACTS OF JAPAN vol. 10, no. 331 (M-533) (2387) 11. November 1986 & JP-A-61 135 822 (KINUGAWA)

## Beschreibung

Die Erfindung bezieht sich auf ein Karosseriefenster mit einem umlaufenden Rahmen mit zwei die Glasscheibe des Fensters umgreifenden Schenkeln.

Bei einem nach der EP-A-0 494 824 bekannten Karosseriefenster ist der Rahmen mit seinen die Glasscheibe umfassenden Schenkeln durch ein Spritzgießverfahren an die Glasscheibe angespritzt.

Bei dem bekannten Karosseriefenster besteht, wie auch bei anderen Karosseriefenstern dieser Art, die Schwierigkeit, daß die Glasscheibe aus herstellungstechnischen Gründen nicht so exakt gearbeitet werden kann, daß bei jedem Scheibenexemplar jeweils genau die gleichen Abmessungen auftreten. Vielmehr ergeben sich Unterschiede in Richtung der jeweiligen Umfangskanten der Scheibe in der Größenordnung +/- 1 mm. Dies ist eine Größenordnung, die für den Betrachter ohne weiteres sichtbar ist. Der an die Glasscheibe angespritzte Rahmen hat bei dem bekannten Karosseriefenster den Nachteil, daß ein nachträglicher Ausgleich einer abweichenden Lage der Glasscheibe im Rahmen nicht möglich ist.

Ein solcher Ausgleich ist auch bei einem nach der JP-A-135 822/86 bekannten Karosseriefenster nicht möglich, jedoch auch nicht erforderlich, weil kein Rahmen vorhanden ist; denn die Glasscheibe ist unmittelbar mit dem Karosserieblech durch Kleben verbunden.

Der Erfindung liegt die Aufgabe zugrunde, ein Karosseriefenster der eingangs genannten Art so auszubilden, daß es möglich ist, vor der endgültigen Fixierung der Scheibe im Rahmen noch einen Lageausgleich zwischen diesen Teilen vornehmen zu können.

Diese Aufgabe wird erfindungsgemäß dadurch gelöst, daß der dem Karosserieblech zugewandte Schenkel des Rahmens mit Durchbrüchen versehen ist, durch die ein auf den Schenkel von außen aufgebrachter Kleber hindurchtreten und den Rahmen mit der Glasscheibe verbinden kann und daß der Schenkel wenigstens auf seiner der Glasscheibe zugewandten Seite mit einem in das Material des Schenkels eingearbeiteten umlaufenden Kanal versehen ist, dessen gesamte offene Fläche mit einer gleich großen Glasscheibenfläche durch den Kleber verbindbar ist.

Mit dieser Anordnung wird erreicht, daß eine Klebeverbindung zwischen Rahmen und Scheibe geschaffen wird, die im Ausgangszustand korrigierbar ist. Insbesondere besteht der Vorteil, daß die Scheibe relativ zum Rahmen oder der Rahmen zur Scheibe ausgerichtet werden kann, bevor das Karosseriefenster in der Karosserie montiert ist. Die Ausrichtung der Teile Rahmen und Scheibe gegeneinander kann also in Form einer Vorfixierung vorgenommen werden, die ein lagengenaues Verbinden dieser beiden Bauteile beinhaltet.

Nach der Fixierung durch den Kleber ist allerdings eine weitere Ausrichtung nicht mehr möglich.

In besonders vorteilhafter Weise besteht der Rahmen aus einem Material, an welchem ein Polyurethankleber nicht haftet, wie PVC oder dergleichen.

Die zwecks gegenseitiger Verbindung zur Verfügung stehende Scheibenfläche wird vollständig ausgenutzt, weil die gesamte, der Scheibe zugewandte offene Fläche des Kanals die Durchbrüche allseits übergreift und mit einer gleich großen Scheibenfläche durch den Kleber verbindbar ist. Damit ist die Haftfläche zwischen Kleber und Scheibe entsprechend vergrößert und die Festigkeit der Verbindung erheblich verbessert.

Selbstverständlich muß dafür Sorge getragen werden, daß der so gebildete Kanal durch den Polyurethankleber während des Montagevorganges vollständig ausgefüllt wird, wobei insbesondere ein als Vergußmasse vorliegender Kleber mit einer derartigen Konsistenz zu wählen ist, daß er in die Hohlräume fließt. Wenn bei vollständiger Füllung der Hohlräume der Polyurethankleber aushärtet, kommt es infolge der Molekülvernetzung, insbesondere bei Zweikomponentenklebern dieser Art, zu einer erheblichen Festigkeit der Verbindung.

Die Erfindung bietet weiter die Möglichkeit, den Kanal in dem aus Gummi oder gummiähnlichen Kunststoff bestehenden Rahmen so auszuführen und die Menge der klebenden Vergußmasse so zu dosieren, daß im Vormontagezustand auch auf der dem Karosserieblech zugewandten Seite der Durchbrüche eine Überfüllung der Durchbrüche auftritt, so daß bei Aufsetzen bzw. Einsetzen der Glasscheibe in den Rahmen das Karosserieblech im Montagezustand den Kleber berühren kann, wodurch ein direktes Festkleben des Karosseriebleches durch den Kleber auf beiden Seiten der Durchbrüche herbeiführbar ist.

Um auch hier die Haftkraft zu verbessern und eine möglichst große Haftoberfläche zu schaffen, kann ein zweiter Kanal auf der dem Karosserieblech zugewandten Seite des Rahmens gegenüber dem ersten Kanal vorgesehen sein, der ebenfalls nicht durch Stege oder dergleichen unterbrochen ist, so daß beidseits des Rahmens die größtmögliche Fläche zur Halterung der Scheibe herangezogen wird.

Da es unter Umständen Schwierigkeiten bereiten kann, die Durchbrüche und die beiden Kanäle luftblasenfrei mit Kleber zu füllen, ist nach einer Weiterbildung der Erfindung vorgesehen, auf der dem Karosserieblech zugewandten Seite des Rahmens eine Zusatzraupe eines Polyurethanklebers aufzubringen, welcher über die Gesamtheit seines Querschnittes beim Zusammenpressen während der Montage eine direkte Verbindung mit der bereits im Rahmen, also in den Durchbrüchen und in den Kanälen befindlichen Polyurethanklebermasse eingeht.

Da die zusätzliche Polyurethankleberraupe nicht neben, sondern auf diejenige Kleberraupe aufgesetzt wird, die sich bereits innerhalb der Kanäle bzw. der Durchbrüche im Rahmen befindet, kann eine dicke und materialintensive Kleberraupe entfallen.

Da der Abstand zwischen der dem Karosserieblech zugewandten Fläche des Steges des Rahmens und dem Karosserieblech bei der erfindungsgemäßen Anordnung relativ klein gehalten werden kann, beispielsweise dadurch, daß die Karosserieform diesem Abstand angepaßt wird oder dadurch, daß der Steg eine größere Wandstärke erhält, wird in jedem Fall bei der erfindungsgemäßen Anwendung eine nicht unerhebliche Materialmenge des Klebers erspart, was außerdem dazu führt, daß die Montage vereinfacht wird und die Montagezeiten verkürzt werden.

Die Ausführung der Verklebung in einem einzigen Arbeitsgang unter Verwendung einer einzigen Kleberraupe setzt allerdings voraus, daß die Einklebung des Rahmens in das Karosserieblech in im wesentlichen horizontaler Lage erfolgt, da sonst gegebenenfalls der in die Durchbrüche und die Nuten des Rahmens eingelagerte Kleber wenigstens teilweise wieder herauslaufen könnte und dies insbesondere dann, wenn von der Einfüllung des Klebers bis zur Verbindung mit dem Karosserieblech mehr als 5 Minuten vergehen.

Selbstverständlich ist es möglich, beispielsweise auf der Basis eines Einkomponentenklebers oder eines Zwei- oder Einkomponentenschaumes, einen Kleber zu entwickeln, der diese Konsistenz nicht aufweist und bei seiner Anbringung wenigstens für mehrere Minuten seine Lage beibehält, so daß eine so vorbereitete Scheibe in einem einzigen Arbeitsgang mit Kleber versehen und in das Karosserieblech eingeklebt werden kann. Hierfür ist auch neben einem Einkomponentenpolyurethanschaum ein Zweikomponentenpolyurethanschaum geeignet.

Selbstverständlich kann jede Art eines Klebers innerhalb des Steges des Rahmens und seiner Durchbrüche verwendet werden, der geeignet ist, einerseits an der Glasscheibe und andererseits am Karosserieblech zu haften. Um die Haftung am Karosserieblech sicherzustellen, kann in Abhängigkeit vom Material des Klebers ein entsprechender Primer Verwendung finden.

Dies gilt ebenso für Materialien, wie Polyurethanschaum oder dergleichen.

Kleber sowie Schaum können geschlossenporig oder offenporig sein. Sind sie offenporig, so besteht die Gefahr, daß zwischen das Karosserieblech und den Rahmen Feuchtigkeit eintritt, wenn auch nur in geringem Maße. Um dies zu verhindern, kann am Ende des Steges oder Schenkels des Rahmens auf der der Kleberraupe gegenüberliegenden Seite eine bewegliche Dichtlippe angeordnet sein, die zwischen der Außenfläche des Rahmens und dem Karosserieblech angeordnet ist und im Montagezustand unter Vorspannung an dem Karosserieblech anliegt. Dies macht die erfindungsgemäße Anordnung insbesondere für die Verwendung von offenporigen Schäumen geeignet.

Die Dichtlippe kann eine Länge haben, die etwa einem Drittel der Gesamtstärke aus Glasscheibe und zwei Rahmenstärken entspricht.

Der Rahmen kann aus Polyvinylchlorid (PVC) oder Elastomeren anderer Art oder Thermoplasten, insbesondere thermoplastischen Elastomeren bestehen.

Die beschriebene Dichtlippe kann unabhängig von der Gestaltung der Klebeverbindung angewendet werden, d.h. sie kann gegen den Eintritt von Feuchtigkeit sowohl bei einem Einraupenpolyurethankleber, einem Zweiraupenpolyurethankleber und/oder Kleber dieser Art mit entsprechenden Schaumzusätzen oder Schäumen dieser Art allein Anwendung finden.

Da die Dichtlippe im wesentlichen bei der Verwendung von Elastomeren als Rahmenmaterial eine besonders gute Elastizität aufweist, besteht die Möglichkeit, die Dichtlippe auch durch andere Materialien, beispielsweise durch ein gesondertes Klebeprofil, zu ersetzen. Geeignet hierfür ist vorzugsweise ein quadratisches Profil aus Moosgummi, welches an zwei Seiten, nämlich an der der Kleberraupe zugewandten Fläche und der im rechten Winkel dazu liegenden Oberfläche des Rahmens mit einem doppelseitigen Klebeband versehen ist, mit welchem es in der Dichtlage befestigbar ist.

Im übrigen sollte dafür Sorge getragen werden, daß die Fläche des Moosgummiprofiles so weit gegen die Polyurethanfläche zurückgenommen ist, bzw. daß die Scheibe so weit innerhalb des Rahmens über das Dichtprofil vorspringt, daß eine möglichst große Fläche des Klebebandes bei der Montage unter Vorspannung gerät.

Anstelle eines quadratischen Moosgummiprofiles können andere Profilformen und Materialien verwendet werden. Geeignet hierfür ist beispielsweise die Form eines Ringschlauches aus Gummi oder gummiähnlichem Kunststoff, vorzugweise auch aus Hartgummi.

Zur Fixierung der Scheibe vor der Montage können Befestigungsklammern vorgesehen sein, welche unterhalb der Durchbrüche bzw. der beiden Kanäle in eine dort vorliegende Nut auf der der Scheibe zugewandten Seite des Schenkels des Rahmens eingreifen und auf der gegenüberliegenden Seite einen freien Rand des Karosseriebleches übergreifen.

Die Erfindung wird im folgenden anhand von Ausführungsbeispielen in der Zeichnung näher erläutert. Es zeigen:
- Fig. 1: eine Ansicht eines Teils eines Rahmens gemäß einer ersten Ausführungsform, mit einem Teilabschnitt einer Glasscheibe
- Fig. 2: eine Fig. 1 entsprechende Ansicht eines Teils eines auf eine Glasscheibe gesetzten Rahmens gemäß einer zweiten Ausführungsform
- Fig. 3: eine Schnittansicht eines Rahmens mit eine Glasscheibe umgreifenden Schenkeln mit Durchbrüchen und mit die Durchbrüche verbindenden und der Glasscheibe zugewandtem Kanal für den Kleber
- Fig. 4: den Rahmen gemäß Fig. 3, montiert mit dem Karosserieblech in einem Schnitt
- Fig. 5: einen Schnitt ähnlich Fig. 3 an einer anderen Ausführungsform
- Fig. 6: einen Schnitt ähnlich Fig. 3 bei einer weiteren Ausführungsform
- Fig. 7: einen Schnitt ähnlich Fig. 3 bei einer weiteren Ausführungsform

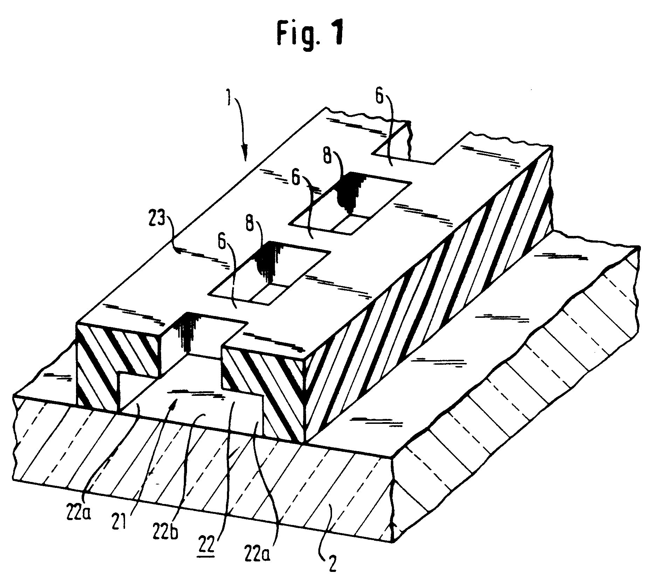

In Fig. 1 ist in schematischer perspektivischer Darstellung ein Abschnitt eines Rahmens 1 wiedergegeben, der mit Durchbrüchen 8 zum Durchtritt eines Klebers versehen ist und die Glasscheibe 2 umgreift. Zur vollständigen Ausnutzung des der Haftung dienenden und zur Verfügung stehenden, dem Rahmen 1 zugewandten Abschnittes 21 der Oberfläche der Scheibe 2, ist ein Kanal 22 vorgesehen, der in das Material des Rahmens 1 eingearbeitet ist und dessen gesamte offene Fläche 22a mit einer gleich großen, die Durchbrüche allseits übergreifenden Fläche 22b der Scheibe 2 durch den Kleber verbindbar ist.

Dieser tritt durch die Durchbrüche 8 in den Kanal 22 ein und verteilt sich in diesem, was durch seine Konsistenz ermöglicht wird. Im gefüllten Zustand wird mithin die auftretende Kraft über die gesamte Fläche 22 der Scheibe 2 sowohl auf die Scheibe 2 als auch auf das Teilstück 23 des Rahmens 1 übertragen.

Die Stege 6 zwischen den Druchbrüchen 8 engen mithin nicht die beiden Verbindungsflächen ein. Die Festigkeit wird auch dadurch nicht beeinträchtigt, daß die Breite der Durchbrüche zusätzlich kleiner als die Breite des Kanales 22 ist.

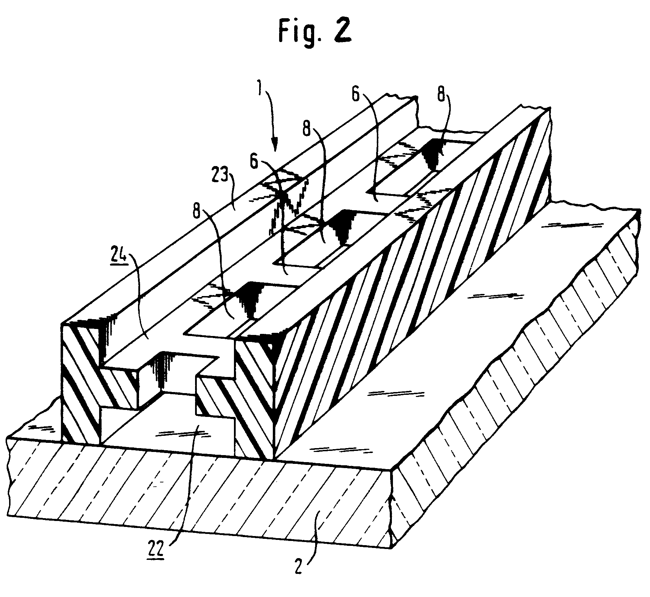

Diese Maßverhältnisse sind, der besseren Deutlichkeit halber, in den Figuren 1 und 2 übertrieben dargestellt. Tatsächlich sind die Unterschiede zwischen den Breiten der Druchbrüche 8 und des Kanales 22 geringer.

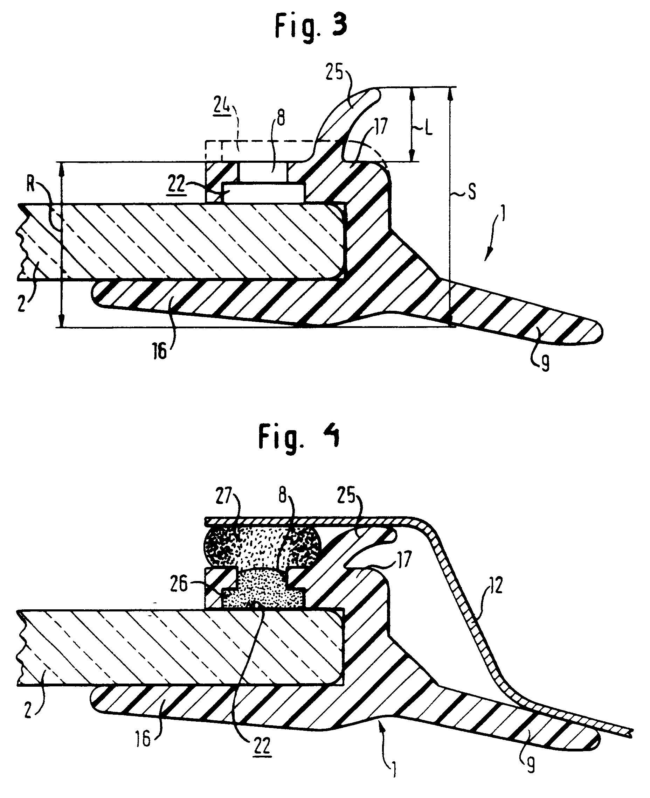

Bei der Ausführungsform nach Fig. 1 besteht außerdem die Möglichkeit, die Menge des Klebers so zu dosieren, daß im Vormontagezustand auch auf der dem Karosserieblech 12 (vgl. Fig. 4) zugewandten Seite der Durchbrüche 8 eine Überfüllung der Durchbrüche 8 auftreten kann, so daß bei Aufsetzen bzw. Einsetzen der Glasscheibe 2 in den Rahmen 1 das Karosserieblech im Montagezustand den Kleber berühren kann, wodurch ein direktes Festkleben des Karosseriebleches durch den Kleber auf beiden Seiten der Durchbrüche herbeiführbar ist.

Um jedoch die Haftkraft weiter zu verbessern, kann gemäß der Ausführungsform nach Fig. 2 ein zweiter Kanal 24 auf der dem Karosserieblech zugewandten Seite des Rahmens gegenüber dem ersten Kanal 22 vorgesehen sein, der ebenfalls nicht durch Stege oder dergleichen unterbrochen ist, so daß beidseits des Rahmens 1 die größtmögliche Fläche zur Halterung und Festlegung der Glasscheibe 2 herangezogen wird.

Gemäß den Figuren 3 und 4 ist ein Rahmen 1 vorgesehen, der zwei Schenkel 16 und 17 und eine Dichtlippe 9 aufweist, wobei die Schenkel eine Glasscheibe 2 beidseits umgreifen und der dem Karosserieblech 12 zugewandte Schenkel 17 mit einem Kanal 22 versehen ist, welcher der Aufnahme eines Klebers 14 dient, wobei gemäß Fig. 1 in dem Schenkel 17 im Abstand zueinander angeordnete Durchbrüche 8 vorgesehen sind, durch welche der Kleber zur Glasscheibe 2 hindurchtreten kann.

Bei der Ausführungsform nach den Figuren 3 und 4 ist am Rahmen 1 neben der Dichtlippe 9 eine unmittelbar neben den Durchbrüchen 8 angeordnete bewegliche weitere Dichtlippe 25 vorgesehen, die im montierten Zustand gemäß Fig. 4 unter Vorspannung an dem Karosserieblech 12 anliegt. Sie wird hierbei entsprechend verformt.

Aus Fig. 3 ist insbesondere zu erkennen, wie der der Glasscheibe 2 zugewandte Kanal 22 im Vormontagezustand relativ zur Glasscheibe 2 liegt und wie die Verklebungsfläche durch die Ausbildung des Kanales 22 vergrößert und damit die Festigkeit der Verbindung verbessert wird. Wie in Fig. 3 gestrichelt angedeutet, kann ein weiterer Kanal 24 jenseits der Durchbrüche 8 vorgesehen sein, der dann auf der gegenüberliegenden Seite die gleiche Verklebungsfläche gegenüber dem Karosserieblech 12 verfügbar macht, wie der Kanal 22.

Da die Gefahr besteht, daß zwischen Karosserieblech 12 und Rahmen 1 Feuchtigkeit eintritt, was insbesondere immer dann gegeben ist, wenn, wie nachstehend noch erläutert wird, als Kleber Schäume verwendet werden, und zwar insbesondere offenporige Schäume, muß für eine Abdichtung gegebenenfalls Sorge getragen werden. Eine solche Abdichtung wird durch die beschriebene Dichtlippe 25 herbeigeführt.

Diese Dichtlippe 25 kann eine Länge L haben, die etwa einem Drittel der Gesamtstärke S aus Stärke der Glasscheibe 2 und zwei Rahmenstärken R entspricht.

In Fig. 4 sind die im Rahmen 1 gebildeten Öffnungen (Durchbrüche 8 bzw. Kanäle 22 und 24) mit einem Kleber, vorzugsweise einem Polyurethankleber, gefüllt, wobei eine Kleberraupe 26 in die Durchbrüche 8 bzw. den Kanal 22 gemäß Fig. 4 eingelegt ist. Bei der Ausführung nach Fig. 4 ist auf die Kleberraupe 26 eine weitere Kleberraupe 27 aufgesetzt, welche die Verbindung zwischen der Glasscheibe 2 und dem Karosserieblech 12 über die Kleberraupe 26 herstellt und die Füllung, insbesondere der Kanäle 22 und 24, erleichtert. Wie aus Fig. 4 hervorgeht, werden beide Kleberraupen 26 und 27 bei der Montage nach Fig. 4 unter Vorspannung gesetzt, was die Füllung der Kanäle 22 und 24 begünstigt. In der Regel erfolgt die Füllung der Hohlräume und damit die Verklebung in horizontaler Lage des Werkstückes, also in einer Lage, wie sie in den Figuren wiedergegeben ist. Auf diese Weise fließt, in Abhängigkeit von seiner Konsistenz, der Kleber in die Hohlräume, wobei seine Aushärtung so gewählt werden sollte, daß ein Herausfließen nach unten weitgehend verhindert ist.

Durch das im Zusammenhang mit Fig. 4 beschriebene Aufeinandersetzen zweier Kleberraupen 26 und 27 wird eine nicht unerhebliche Materialmenge des Klebers gespart.

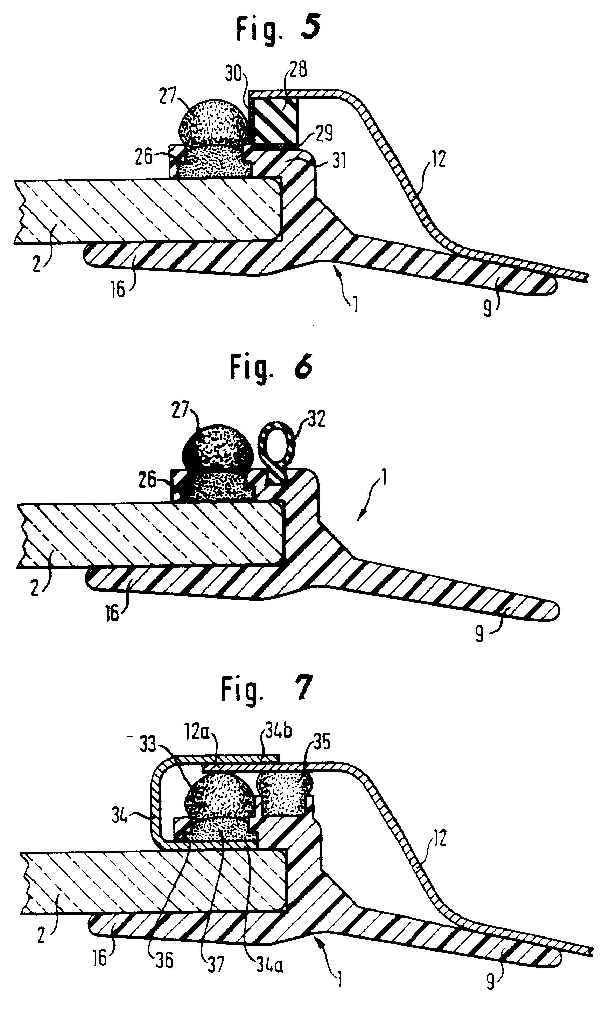

Aus diesem Grunde findet eine solche Ausführungsform (Aufeinandersetzen zweier Kleberraupen 26 und 27) auch Anwendung bei den Ausführungsformen nach den Figuren 5 und 6.

Bei der Ausführungsform nach Fig. 5 ist anstelle der bei der Ausführungsform nach den Figuren 3 und 4 verwendeten Dichtlippe 25 ein gesondertes Klebeprofil 28, vorzugweise aus weichem Moosgummi, vorgesehen. Dieses ist mit zwei Abschnitten 29 und 30 eines doppelseitigen Klebebandes auf dem Rahmen 1 einerseits und an der Kleberraupe 27 andererseits befestigt. Wie aus Fig. 5 weiter hervorgeht, springt die Scheibe 2 innerhalb des Rahmens 1 über das Klebeprofil 28 so weit vor, daß eine möglichst große Fläche des Klebebandes 29 bei der Montage unter Vorspannung gerät, indem es sich einerseits gegenüber dem Karosserieblech 12 und andererseits gegenüber dem zugehörigen Rahmenabschnitt 31 abstützt.

Fig. 6 zeigt eine Ausführungsform, bei welcher anstelle eines quadratischen Moosgummiprofiles ein Ringschlauchprofil 32 aus Gummi oder gummiähnlichem Kunststoff, vorzugsweise auch aus Hartgummi, vorgesehen ist.

Schließlich können die Kleberraupen 33 und 37 mit der Ausführungsform nach Fig. 7 auch aus Schaum bestehen, was neben einer Kostensenkung den Vorteil hat, daß bei den hier vorliegenden kleinen Querschnitten eine relativ rasche Aushärtung und Festlegung bewirkt wird. Zusätzlich kann auch bei der Ausführungsform nach Fig. 7 ein weiteres Klebeprofil 35 gemäß den Klebeprofilen 30 und 32 nach den Ausführungsformen gemäß den Figuren 5 und 6 vorgesehen sein, das hier zweckmäßigerweise ebenfalls aus einem Schaum, vorzugsweise einem Polyurethanschaum auf Zweikomponentenbasis, besteht.

Zur Fixierung der Glasscheibe 2 vor der Montage können Befestigungsklammern 34 vorgesehen sein, die gemäß der Ausführungsform nach Fig. 7 im Abstand zueinander rund um den Rahmen angeordnet sind und jeweils mit einem Schenkel 34a in Nuten 36 im Rahmen 1 eingreifen, während der andere Schenkel 34b, wie dargestellt, das freie Ende bzw. die freie Kante 12a des Karosseriebleches 12 in diesem Bereich übergreift.

Die Vorspannung auf die Kleberraupen oder Schaumstoffraupen 33 und 37 wird bei dieser Anordnung auch von den Befestigungsklammern 34 aufgebracht.

## Patentansprüche

1. Karosseriefenster mit einem umlaufenden Rahmen mit zwei die Glasscheibe des Fensters umgreifenden Schenkeln,
dadurch gekennzeichnet,
daß der dem Karosserieblech (12) zugewandte Schenkel (17) des Rahmens (1) mit Durchbrüchen (8) versehen ist, durch die ein auf den Schenkel von außen aufgebrachter Kleber (14) hindurchtreten und den Rahmen (1) mit der Glasscheibe (2) verbinden kann und daß der Schenkel (17) wenigstens auf seiner der Glasscheibe (2) zugewandten Seite mit einem in das Material des Schenkels (17) eingearbeiteten umlaufenden Kanal (22) versehen ist, dessen gesamte offene Fläche (22a) mit einer gleich großen Glasscheibenfläche (21) durch den Kleber (14, 26, 27, 33, 37) verbindbar ist.

2. Karosseriefenster nach Anspruch 1, dadurch gekennzeichnet, daß der Rahmen (1) aus einem Material besteht, an welchem ein Polyurethankleber nicht haftet, wie PVC oder dergleichen.

3. Karosseriefenster nach einem der Ansprüche 1 und 2, dadurch gekennzeichnet, daß ein zweiter Kanal (24) auf der dem Karosserieblech (12) zugewandten Seite des Rahmens (1) gegenüber dem ersten Kanal (22) vorgesehen ist, der ebenfalls nicht durch Stege (6) oder dergleichen unterbrochen ist.

4. Karosseriefenster nach einem der Ansprüche 1 bis 3, dadurch gekennzeichnet, daß auf der dem Karosserieblech (12) zugewandten Seite des Rahmens (1) eine Zusatzraupe (27) eines Polyurethanklebers aufgebracht ist, welche über die Gesamtheit seines Querschnittes beim Zusammenpressen während der Montage eine direkte Verbindung mit der bereits im Rahmen (1), also in den Durchbrüchen (8) und in den Kanälen (22, 24) befindlichen Polyurethanklebermasse eingeht.

5. Karosseriefenster nach einem der vorhergehenden Ansprüche, dadurch gekennzeichnet, daß am Ende des Steges oder Schenkels (17) des Rahmens (1) auf der der Kleberraupe (26, 27) gegenüberliegenden Seite eine bewegliche Dichtlippe (25) angeordnet ist, die zwischen der Außenfläche des Rahmens (1) und dem Karosserieblech (12) angeordnet ist und im Montagezustand unter Vorspannung an dem Karosserieblech (12) anliegt.

6. Karosseriefenster nach Anspruch 5, dadurch gekennzeichnet, daß die Dichtlippe (25) eine Länge (L) hat, die etwa einem Drittel der Gesamtstärke (S) aus Glasscheibe (2) und zwei Rahmenstärken (R) entspricht.

7. Karosseriefenster nach einem der Ansprüche 5 und 6, dadurch gekennzeichnet, daß anstelle der Dichtlippe (25) ein gesondertes Klebeprofil (28) vorgesehen ist.

8. Karosseriefenster nach Anspruch 7, dadurch gekennzeichnet, daß das Klebeprofil einen quadratischen Querschnitt aufweist und aus Moosgummi besteht.

9. Karosseriefenster nach Anspruch 8, dadurch gekennzeichnet, daß das quadratische Klebeprofil (28) an der der Kleberraupe (27) zugewandten Fläche und der im rechten Winkel dazu liegenden Oberfläche des Rahmens (1) mit der Kleberraupe (27) und dem Rahmen (1) lösbar verbunden ist.

10. Karosseriefenster nach Anspruch 9, dadurch gekennzeichnet, daß ein doppelseitiges Klebeband (29, 30) vorgesehen ist, welches die Verbindung an den beiden obengenannten Flächen (29, 30) mit der Kleberraupe (27) und dem Rahmen (1) herstellt.

11. Karosseriefenster nach einem der Ansprüche 8 bis 10, dadurch gekennzeichnet, daß die Fläche des Klebeprofiles (28) so weit gegen die Polyurethanfläche der Kleberraupe (27) zurückgenommen ist, bzw. daß die Scheibe (2) so weit innerhalb des Rahmens (1) über das Klebeprofil (28) vorspringt, daß eine möglichst große Fläche des Klebebandes (29) bei der Montage unter Vorspannung gerät.

12. Karosseriefenster nach einem der Ansprüche 8 bis 11, dadurch gekennzeichnet, daß anstelle eines quadratischen Moosgummiprofiles andere Profilformen und Materialien Verwendung finden.

13. Karosseriefenster nach Anspruch 12, dadurch gekennzeichnet, daß anstelle des Moosgummiprofiles ein Profil mit der Querschnittform eines Ringschlauches aus Gummi oder gummiähnlichem Kunststoff, vorzugsweise auch aus Hartgummi, verwendet wird.

14. Karosseriefenster nach einem der vorhergehenden Ansprüche, dadurch gekennzeichnet, daß zur Fixierung der Scheibe (2) vor der Montage Befestigungsklammern (34) vorgesehen sind, welche unterhalb der Durchbrüche (8) bzw. der beiden Kanäle (22, 24) in eine dort vorliegende Nut (36) auf der der Scheibe zugewandten Seite des Schenkels (17) des Rahmens (1) eingreifen und auf der gegenüberliegenden Seite einen freien Rand des Karosseriebleches übergreifen.

## Claims

1. A bodywork window with a surrounding frame with two arms engaging around the glass pane of the window, **characterized in that** the arm (17) of the frame (1) towards the bodywork panel (12) is provided with apertures (8) through which an adhesive (14) applied to the arm from outside can penetrate and can join the frame (1) to the glass pane (2), and the arm (17) is provided at least on its side towards the glass pane (2) with a surrounding channel (22) which is formed in the material of the arm (17) and the entire open face (22a) of which can be joined to an area (21) of the glass pane of equal size by the adhesive (14, 26, 27, 33, 37).

2. A bodywork window according to Claim 1, **characterized in that** the frame (1) consists of a material to which a polyurethane adhesive does not adhere, such as PVC or the like.

3. A bodywork window according to one of Claims 1 and 2, **characterized in that** a second channel (24) is provided on the side of the frame (1) towards the bodywork panel (12) opposite the first channel (22) which is likewise not interrupted by webs (6) or the like.

4. A bodywork window according to one of Claims 1 to 3, **characterized in that** an additional bead (27) of a polyurethane adhesive is applied to the side of the frame (1) towards the bodywork panel (12), the said bead (27) forming a direct bond with the mass of polyurethane adhesive already present in the frame (1), *i*.*e*. in the apertures (8) and in the channels (22, 24), over the entirety of the cross-section thereof during the compression in the course of assembly.

5. A bodywork window according to one of the preceding Claims, **characterized in that** a movable sealing lip (25), which is arranged between the outer face of the frame (1) and the bodywork panel (12) and which rests with pre-stressing against the bodywork panel (12) in the assembled state, is arranged at the end of the web or arm (17) of the frame (1) on the side opposite the bead (26, 27) of adhesive.

6. A bodywork window according to Claim 5, **characterized in that** the sealing lip (25) has a length (**L**) which corresponds to approximately a third of the entire thickness (**S**) of the glass pane (2) and two frame thicknesses (**R**).

7. A bodywork window according to one of Claims 5 and 6, **characterized in that** a separate adhesive profile (28) is provided instead of the sealing lip (25).

8. A bodywork window according to Claim 7, **characterized in that** the adhesive profile has a square cross-section and consists of rubber sponge.

9. A bodywork window according to Claim 8, **characterized in that** the square adhesive profile (28) is detachably connected to the bead (27) of adhesive and the frame (1) on the face towards the bead (27) of adhesive and on the surface of the frame (1) situated at a right angle thereto.

10. A bodywork window according to Claim 9, **characterized in that** a double-sided adhesive tape (29, 30) is provided which forms the join on the above two faces (29, 30) with the bead (27) of adhesive and the frame (1).

11. A bodywork window according to one of Claims 8 to 10, **characterized in that** the face of the adhesive profile (28) is withdrawn so far towards the polyurethane face of the bead (27) of adhesive, or the pane (2) projects so far inside the frame (1) beyond the adhesive profile (28), that the largest possible area of the adhesive tape (29) is pre-stressed during assembly.

12. A bodywork window according to one of Claims 8 to 11, **characterized in that** other profile shapes and materials are used instead of a square rubber-sponge profile.

13. A bodywork window according to Claim 12, **characterized in that** a profile with the cross-sectional shape of an annular tube of rubber or rubber-like plastics material, preferably also of hard rubber, is used instead of the rubber-sponge profile.

14. A bodywork window according to one of the preceding Claims, **characterized in that**, in order to fix the pane (2) before assembly, fastening clamps (34) are provided, which engage below the apertures (8) or the two channels (22, 24) into a groove (36) provided there on the side of the arm (17) of the frame (1) towards the pane and which engage on the opposite side over a free edge of the bodywork panel.

## Revendications

1. Fenêtre de carrosserie avec un cadre périphérique avec deux côtés entourant la vitre de la fenêtre,
caractérisée
en ce que le côté (17) du cadre (1), tourné vers la tôle de carrosserie (12), est pourvu d'ajours (8), à travers lesquels une colle (14), appliquée de l'extérieur sur le côté, peut passer et assembler le cadre (1) à la vitre (2) et en ce que le côté (17) est pourvu, au moins sur sa face tournée vers la vitre (2), d'un canal (22) périphérique, pratiqué dans le matériau du côté (17), dont toute la surface (22a) ouverte peut être assemblée avec une surface de vitre (21) de mêmes dimensions, par la colle (14, 26, 27, 33, 37).

2. Fenêtre de carrosserie selon la revendication 1, caractérisée en ce que le cadre (1) est fait d'un matériau sur lequel une colle de polyuréthane n'adhère pas, tel que du PVC ou similaire.

3. Fenêtre de carrosserie selon l'une des revendications 1 et 2, caractérisée en ce qu'un deuxième canal (24) est prévu sur le côté, tourné vers la tôle de carrosserie (12), du cadre (1), face au premier canal (22), qui n'est pas non plus interrompu par des cloisons (6) ou similaires.

4. Fenêtre de carrosserie selon l'une des revendications 1 à 3, caractérisée en ce que sur le côté, tourné vers la tôle de carrosserie (12), du cadre (1), est appliqué un cordon supplémentaire (27) d'une colle de polyuréthane, qui assure une liaison directe, sur toute sa section transversale, lors du pressage pendant le montage, avec la masse de colle de polyuréthane se trouvant déjà dans le cadre (1), donc dans les ajours (8) et dans les canaux (22, 24).

5. Fenêtre de carrosserie selon l'une des revendications précédentes, caractérisée en ce qu'à l'extrémité de la cloison ou du côté (17) du cadre (1), sur le côté opposé au cordon de colle (26, 27), est placée une lèvre d'étanchéité (25) mobile, qui se trouve entre la surface extérieure du cadre (1) et la tôle de carrosserie (12) et qui à l'état de montage s'applique sous précontrainte contre la tôle de carrosserie (12).

6. Fenêtre de carrosserie selon la revendication 5, caractérisée en ce que la lèvre d'étanchéité (25) présente une longueur (L) qui correspond à peu près à un tiers de l'épaisseur totale (S) de la vitre (2) et de deux épaisseurs de cadre (R).

7. Fenêtre de carrosserie selon l'une des revendications 5 et 6, caractérisée en ce qu'au lieu de la lèvre d'étanchéité (25) il est prévu un profilé adhésif (28) séparé.

8. Fenêtre de carrosserie selon la revendication 7, caractérisée en ce que le profilé adhésif présente une section transversale carrée et est fait de caoutchouc mousse.

9. Fenêtre de carrosserie selon la revendication 8, caractérisée en ce que le profilé adhésif (28) carré est assemblé de manière amovible avec le cordon de colle (27) et le cadre (1), sur la surface tournée vers le cordon de colle (27) et la surface, à angle droit par rapport à celle-ci, du cadre (1).

10. Fenêtre de carrosserie selon la revendication 9, caractérisée en ce qu'il est prévu une bande adhésive (29, 30) double face, qui assure la liaison sur les deux surfaces (29, 30) citées avec le cordon de colle (27) et le cadre (1).

11. Fenêtre de carrosserie selon l'une des revendications 8 à 10, caractérisée en ce que la surface du profilé adhésif (28) est suffisamment en retrait contre la surface de polyuréthane du cordon de colle (27), ou en ce que la vitre (2) dépasse du profilé adhésif (28), suffisamment à l'intérieur du cadre (1) pour qu'une surface aussi grande que possible de la bande adhésive (29) passe sous précontrainte lors du montage.

12. Fenêtre de carrosserie selon l'une des revendications 8 à 11, caractérisée en ce qu'au lieu d'un profilé carré en caoutchouc mousse on utilise d'autres formes de profilé et matériaux.

13. Fenêtre de carrosserie selon la revendication 12, caractérisée en ce qu'au lieu du profilé en caoutchouc mousse on utilise un profilé avec pour forme de section transversale celle d'un tuyau annulaire en caoutchouc ou en matière synthétique semblable au caoutchouc, de préférence aussi en caoutchouc dur.

14. Fenêtre de carrosserie selon l'une des revendications précédentes, caractérisée en ce que pour la fixation de la vitre (2) avant le montage, sont prévues des agrafes de fixation (34), qui s'engagent, au-dessous des ajours (8) ou des deux canaux (22, 24), dans une rainure (6) s'y trouvant, sur la face tournée vers la vitre du côté (17) du cadre (1), et passent sur un bord libre de la tôle de carrosserie, sur la face opposée.
